(19) Europäisches Patentamt / European Patent Office / Office européen des brevets

(11) **EP 4 376 025 B1**

(12) **EUROPEAN PATENT SPECIFICATION**

(45) Date of publication and mention
of the grant of the patent:
**07.01.2026 Bulletin 2026/02**

(51) International Patent Classification (IPC):
**H01B 3/56** (2006.01)　　**H02B 13/055** (2006.01)

(52) Cooperative Patent Classification (CPC):
**H01B 3/56; H02B 13/055**

(21) Application number: **22209997.0**

(22) Date of filing: **28.11.2022**

(54) **GAS-INSULATED ELECTRICAL APPARATUS COMPRISING HEPTAFLUOROISOBUTYRONITRILE AND HEPTAFLUOROISOPROPYL(TRIFLUOROMETHYL) KETONE**

GASISOLIERTE ELEKTRISCHE VORRICHTUNG MIT HEPTAFLUORISOBUTYRONITRIL UND HEPTAFLUORISOPROPYL(TRIFLUOROMETHYL)KETON

APPAREIL ÉLECTRIQUE ISOLÉ PAR GAZ COMPRENANT DE L'HEPTAFLUOROISOMERASE ET DE L'HEPTAFLUOROISOPROPYL(TRIFLUOROMÉTHYL)CÉTONE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**29.05.2024 Bulletin 2024/22**

(73) Proprietor: **GE Vernova Technology GmbH 5400 Baden (CH)**

(72) Inventors:
• **GAUDART, Georges**
**69100 VILLEURBANNE (FR)**
• **GREGOIRE, Cyril**
**69100 VILLEURBANNE (FR)**
• **BERTELOOT, Thomas**
**69100 VILLEURBANNE (FR)**
• **OZIL, Joël**
**69100 VILLEURBANNE (FR)**
• **KIEFFEL, Yannick**
**69100 VILLEURBANNE (FR)**

(74) Representative: **Rüger Abel Patentanwälte PartGmbB**
**Webergasse 3**
**73728 Esslingen a. N. (DE)**

(56) References cited:
**EP-A1- 4 120 292**　　**US-A1- 2022 359 138**

**Description**

**TECHNICAL FIELD**

The invention relates to the field of electrical insulation and electric arc extinction in medium- or high-voltage equipment and, in particular, in high-voltage equipment.

The invention concerns a medium- or high-voltage equipment in which electrical insulation and/or electric arc extinction is performed by a gaseous medium comprising heptafluoroisobutyronitrile and heptafluoro(trifluoromethyl) ketone in a mixture with a dilution gas comprising, in particular, either carbon dioxide and dioxygen or nitrogen and dioxygen.

The invention also concerns the use of a gaseous medium comprising heptafluoroisobutyronitrile and heptafluoro(trifluoromethyl) ketone in a mixture with a dilution gas comprising, in particular, either carbon dioxide and dioxygen or nitrogen and dioxygen as a gas for electrical insulation and/or for electric arc extinction in medium- or high-voltage equipment.

More particularly, the present invention relates to the use of insulation having a low environmental impact based on a gaseous medium comprising

- either heptafluoroisobutyronitrile, heptafluoro isopropyl(trifluoromethyl) ketone, carbon dioxide and dioxygen
- or heptafluoroisobutyronitrile, heptafluoro isopropyl(trifluoromethyl) ketone, nitrogen and dioxygen

as a gas for electrical insulation and/or for electric arc extinction in medium- or high-voltage equipment.

This insulation based on such a gaseous medium may optionally be combined with solid insulation of low dielectric permittivity.

According to the invention, the quantity of heptafluoroisobutyronitrile is less than or equal to 0.9 mol% in the gas medium.

**PRIOR ART**

In medium- or high-voltage substation equipment, electrical insulation and, if necessary, electric arc extinction are typically performed by a gas that is confined inside an enclosure in said equipment.

Above and below, the expression "medium voltage" is used in the conventionally accepted manner, i.e. the term "medium voltage" refers to a voltage that is greater than 1000 volts (V) for alternating current (AC) or greater than 1500 volts for direct current (DC), but that does not exceed 52,000 V for AC, or 75,000 V for DC.

In addition, the expression "high voltage" is used in the conventionally accepted manner, i.e. the expression "high voltage" refers to a voltage that is strictly greater than 52,000 V for AC and 75,000 V for DC.

Currently, the gas most often used in that type of equipment is sulfur hexafluoride ($SF_6$). That gas presents dielectric strength that is relatively high, good thermal conductivity and low dielectric losses. It is chemically inert, non-toxic for humans and animals and, after being dissociated by an electric arc, it recombines quickly and almost completely. In addition, it is non-flammable and its price is still moderate.

However, $SF_6$ has the main drawback of presenting a global warming potential (GWP) of 25,200 (relative to $CO_2$ over 100 years) and remains in the atmosphere for a time period of 3200 years, and this places it among gases having strong global warming power. $SF_6$ was therefore included in the Kyoto protocol (1997) in the list of gases for which emissions need to be limited.

The best way to limit $SF_6$ emissions consists in limiting the use of said gas, and this has led manufacturers to look for alternatives to $SF_6$.

"Natural" gases do not have a negative impact on the environment (carbon dioxide ($CO_2$) having a GWP that is equal to 1, or of GWP that is zero, such as for nitrogen ($N_2$) or air) but they present a dielectric strength that is much lower than that of $SF_6$. Thus, for example, the alternating current (AC) (50 hertz (Hz)) dielectric strengths of air and of nitrogen are substantially one-third that of $SF_6$. As a result, the use of those "natural" gases for electrical insulation and/or electric arc extinction in medium- or high-voltage equipment would require drastically increasing the volume and/or the filling pressure of said equipment, which goes against efforts that have been made over the past few decades to develop equipment with low Life Cycle Assessment (LCA) i.e. to develop equipment that is compact, safe for personnel, and less and less bulky.

International application WO 2012/080246 describes the use of one (or more) fluoroketone(s) in a mixture with air as electrical insulation and/or electric arc extinction means having low environmental impact [1]. Because of the high boiling points for the fluids proposed, i.e. 49°C for fluoroketone C6 and 26.9°C for heptafluoroisopropyl(trifluoromethyl) ketone (fluoro ketone C5), those fluids are found in the liquid state at the usual minimum pressures and service temperatures for medium- and high-voltage equipment, thus obliging the inventors to add systems for vaporizing the liquid phase or for heating the outside of the equipment so as to maintain the temperature of the equipment above the liquefaction temperature for fluoroketones. That outside vaporizing system and in particular heating system complicates the design of the equipment, reduces its reliability in the event of its power supply being cut off, and gives rise to additional electricity consumption that may reach one hundred megawatt hours (MWh) over the lifetime of the equipment. This also goes against the aim of a low LCA i.e. of reducing the environmental impact of the equipment and in particular, reducing carbon emissions. From a point of view of reliability at low temperature, in the event of the power supply being cut off at low temperature, the gaseous phase of the fluoroketone(s) liquefies, thereby considerably lowering the concentration of fluoroketone(s) in the gas mixture and thus reducing the insulating power of the equipment, which equipment is then incapable of withstanding the voltage in the event of the power supply being restored.

Moreover, a new gas presenting electrical insulation properties that are sufficient for an application in the field of high- or medium-voltage equipment has been developed. More precisely, that gas is a mixture of two molecules: one is present in a great majority and the second is heptafluoroisobutyronitrile of formula (I): $(CF_3)_2CF-CN$ (I) and of CAS number: 42532-60-5 and is present in a smaller amount. This gas mixture has the advantage of being based on an $SF_6$ substitute presenting a GWP that is less than that of $SF_6$ in solution in a host or dilution gas having a very low GWP, such as carbon dioxide ($CO_2$) having a GWP that is equal to 1, or of GWP that is zero, such as for nitrogen ($N_2$) or air. The heptafluoroisobutyronitrile gas implemented in these mixtures is sold by the 3M™ company under the commercial name 3M™ Novec™ 4710.

International application WO 2014/037566 describes the use of such mixtures as an insulation gas in high- or medium-voltage equipment, associated with solid insulation [2].

A particular insulation gas, namely comprising heptafluoroisobutyronitrile, $CO_2$, and dioxygen ($O_2$), dioxygen being present in said gas medium in a molar percentage lying in the range 1% to 25%, is described in international application WO 2015/040069 [3]. Indeed, it has been identified that a few percent of oxygen added to the mixture comprising heptafluoroisobutyronitrile and $CO_2$ makes it possible to obtain synergy in the insulation properties of the gas mixture as a whole.

General Electric Company sells an electrical insulation gas mixture under the name g[3] (for "green gas for grid") which has 98% less impact of GWP than $SF_6$ and which comprises and in particular consists of :

- from 70 mole percent (mol%) to 97 mol% of $CO_2$,
- from 3 mol% to 10 mol% of $(CF_3)_2CF-CN$, and
- from 0 mol% to 20 mol% of $O_2$.

The inventors have sought to find an insulation system comprising at least a gas or a mixture of gases that, while presenting electrical insulation or electric arc extinction properties that are sufficient for application in the field of medium- or high-voltage equipment and that are in particular comparable to $SF_6$ equipment, also has a low impact on the environment in terms of GWP and LCA.

They have also sought to provide an insulation system, and in particular the gas or mixture of gases included in said system, that is non-toxic for humans and the environment.

They have further sought to provide an insulation system, and in particular the gas or mixture of gases, having a manufacture or purchase cost that is compatible with use on an industrial scale.

They have further sought to provide medium- or high-voltage equipment based on said insulation system, and in particular the gas or mixture of gases having size and pressure that are close to those of equivalent equipment insulated with $SF_6$ and that does not present liquefaction at the minimum utilization temperature without the addition of an external heat source.

A medium or high voltage electrical device comprising a gas mixture comprising a dilution gas (e.g., N2, O2, CO2) and preferably heptafluoroisobutyronitrile is disclosed in US2022359138.

## DESCRIPTION OF THE INVENTION

These objects and others are achieved by the invention that proposes the use of a particular gas mixture, making it possible to obtain medium- or high-voltage equipment having low environmental impact in terms of GWP and also of LCA. Indeed, this particular gas mixture does not need the equipment insulated therewith to have a size higher than the equivalent equipment insulated with $SF_6$ and/or to present an external heat source.

Thus, the insulation system implemented in the context of the present invention is based on a gaseous medium comprising heptafluoroisobutyronitrile and heptafluoroisopropyl(trifluoromethyl) ketone in a mixture with a dilution gas for use as a gas for electrical insulation and/or for electric arc extinction in medium- or high-voltage equipment, the equipment being a gas-insulated electrical transformer, an overhead or buried gas-insulated line, a set of busbars for transporting or distributing electricity, an element for connection to the other equipment in the network, or a connector/disconnector.

In the present invention, the expressions "gas mixture", "gaseous mixture", "gas medium" and "gaseous medium" are equivalent and can be used interchangeably.

In general, the present invention provides medium- or high-voltage equipment including a leaktight enclosure in which there are located electrical components and a gas medium for providing electrical insulation and/or for extinguishing electric arcs that are likely to occur in said enclosure, said gas medium comprising heptafluoroisobutyronitrile and heptafluoro isopropyl(trifluoromethyl)ketone in a mixture with a dilution gas.

In the equipment of the present invention, the gas insulation implements a gas medium comprising heptafluoroisobutyronitrile and heptafluoroisopropyl (trifluoromethyl) ketone.

As already explained, heptafluoroisobutyronitrile of formula (I): $(CF_3)_2CFCN$ (I), hereafter written i-$C_3F_7CN$, corresponds to 2,3,3,3-tetrafluoro-2-trifluoromethyl propanenitrile, CAS number: 42532-60-5. This compound presents

(i) a boiling point of -4.7°C at 1013 hectopascals (hPa) (boiling point measured in accordance with ASTM D1120-94 "Standard Test Method of Boiling Point of Engine Coolants");
(ii) a molar mass of 195 g.mol$^{-1}$;
(iii) a GWP of 2750 (calculated over 100 years in accordance with the IPCC method, 2022); and
(iv) an ozone depletion potential (ODP) of 0.

Table I below gives the relative dielectric strength of heptafluoroisobutyronitrile having formula (I), as normalized relative to the gas that it is desired to replace, i.e. $SF_6$ and as compared to that of $N_2$, said dielectric strength being measured at atmospheric pressure, at a DC voltage, between two steel electrodes having a diameter of 2.54 centimeters (cm) and spaced apart by 0.1 cm.

Table I

| $SF_6$ | $N_2$ | i-$C_3F_7CN$ |
|---|---|---|
| 1.0 | 0.35-0.4 | 2.6 |

Heptafluoroisopropyl(trifluoromethyl) ketone of formula (II): $CF_3C(O)CF(CF_3)_2$ (II), corresponds to 1,1,1,3,4,4,4-heptafluoro-3-(trifluoromethyl)butan-2-one, CAS number: 756-12-7. This compound presents:

(i) a boiling point of 26.9°C at 1013 hectopascals (hPa) (boiling point measured in accordance with ASTM D1120-94 "Standard Test Method of Boiling Point of Engine Coolants");
(ii) a molar mass of 266 g.mol$^{-1}$;
(iii) a GWP < 1 (calculated over 100 years in accordance with the IPCC method, 2022); and
(iv) an ozone depletion potential (ODP) of 0.

Table II below gives the relative dielectric strength of heptafluoroisopropyl(trifluoromethyl) ketone of formula (II), as normalized relative to the gas that it is desired to replace, i.e. $SF_6$, said dielectric strength being measured according to ASTM D877 using disk electrodes with a 2.5 mm gap.

Table II

| $SF_6$ | $CF_3C(O)CF(CF_3)_2$ |
|---|---|
| 1.0 | 1.5 |

Heptafluoroisopropyl(trifluoromethyl)ketone gas is sold by the 3M™ company under the commercial name 3M™ Novec™ 5110.

Thus, the above-described heptafluoroisobutyro nitrile and heptafluoroisopropyl (trifluoromethyl) ketone that are neither toxic, nor corrosive, nor flammable, and that present a GWP that is significantly less than that of $SF_6$, are endowed with electrical insulation and electric arc extinction properties suitable for enabling them, mixed with a dilution gas, to replace the $SF_6$ as a gas for electrical insulation and/or electric arc extinction in medium- or high-voltage equipment.

However, even if lower than that of $SF_6$, the GWP of heptafluoroisobutyronitrile is high compared to the one of heptafluoroisopropyl(trifluoromethyl) ketone. It is therefore appropriate to minimize the presence of this heptafluoroisobutyronitrile in the gas mixture and to determine its quantity as a function of the target GWP of the gas mixture.

To this extend, it should be noted that the inventors have identified a synergy factor between the heptafluoroisobutyronitrile and the heptafluoro isopropyl (trifluoromethyl) ketone in the gaseous medium according to the invention which makes it possible to improve the dielectric and extinguishing properties while using quantity of heptafluoroisobutyronitrile below to the quantity implemented in the prior art gas mixture.

Indeed, adding heptafluoroisopropyl (trifluoromethyl) ketone in a quantity of less than or equal to 5 mol% to a g3-

type mixture makes it possible to increase the dielectric withstand of the resulting mixture by about 20%. In addition, if the quantity of heptafluoroisobutyronitrile in the mixture implemented in the present invention is decreased to a quantity of less than or equal to 0.9 mol%, the addition of heptafluoroisopropyl(trifluoromethyl)ketone in the quantity above identified allows to compensate at least partly the loss of dielectrical performance.

In a particular embodiment, the gaseous medium implemented in the equipment of the invention comprises a quantity of heptafluoroisopropyl(trifluoromethyl) ketone of less than or equal to 5 mol%. Advantageously, in the gas mixture implemented in the equipment of the invention, the quantity of heptafluoroisopropyl (trifluoromethyl) ketone is comprised between 0.1 mol% and 5 mol%, in particular between 0.5 mol% and 3 mol% and, more particularly, between 1 mol% and 2 mol%. In a more particular embodiment, the quantity of heptafluoroisopropyl(trifluoromethyl) ketone is of about 1.5 mol% (i.e. 1.5 mol% $\pm$ 0.3 mol%).

According to the invention, the gaseous medium implemented in the equipment of the invention comprises a quantity of heptafluoroisobutyronitrile of less than or equal to 0.9 mol%. Advantageously, in the gas mixture implemented in the equipment of the invention, the quantity of heptafluoroisobutyronitrile is comprised between 0.001 mol% and 0.9 mol%, in particular between 0.01 mol% and 0.5 mol% and, more particularly, between 0.05 mol% and 0.2 mol%. In a more particular embodiment, the quantity of heptafluoro isobutyronitrile is of about 0.1 mol% (i.e. 0.1 mol% $\pm$ 0.03 mol%).

More particularly, the present invention provides gas insulation having low environmental impact combining a gas mixture having an environmental impact that is low (low GWP relative to $SF_6$ or even to prior art gas mixtures comprising heptafluoroisobutyronitrile and heptafluoroisopropyl(trifluoromethyl)ketone, that is compatible with minimum utilization temperatures of the equipment, and that has dielectric, extinguishing and thermal dissipation properties that are better than those of conventional gases such as $CO_2$, air, or nitrogen.

In the context of the present invention, the heptafluoroisobutyronitrile and the heptafluoro isopropyl(trifluoromethyl) ketone are present in the medium- or high-voltage equipment exclusively or almost exclusively in the gaseous state under all temperature conditions for which the gaseous medium is intended to be subjected to, once confined inside the equipment. To do this, the heptafluoroisobutyronitrile and the heptafluoroisopropyl(trifluoromethyl) ketone should be present in the equipment at partial pressures that are selected as a function of the respective saturated vapor pressures presented by these compounds at the minimum utilization temperature of the equipment. The term "minimum utilization temperature" is used of equipment to refer to the lowest temperature at which said equipment is designed to be used.

In view of the generally recommended filling pressure levels for medium- and high-voltage equipment that are typically several bars and in view of, firstly, the liquefaction temperature of heptafluoroisopropyl(trifluoromethyl) ketone at normal atmospheric pressure (1 013.25 hPa) and, secondly the GWP of heptafluoroisobutyronitrile, the latter are most often used diluted in at least one other gas in such a manner as to obtain the recommended filling pressure level for the equipment under consideration while guaranteeing that heptafluoroisopropyl(trifluoromethyl) ketone is maintained in the gaseous state over the entire range of utilization temperatures for said equipment.

According to the invention, when said other gas, known as a dilution gas or vector gas or buffer gas, is present it is selected from gases that meet the four following criteria:

(1) presenting a boiling temperature that is very low, less than the minimum utilization temperature of the equipment; said boiling temperature typically being equal to or less than -50°C at standard pressure;
(2) presenting dielectric strength that is greater than or equal to that of carbon dioxide in test conditions that are identical to those used for measuring the dielectric strength of said carbon dioxide (i.e. same equipment, same geometrical configuration, same operating parameters, ...);
(3) being non-toxic for humans and the environment; and
(4) presenting a GWP that is lower than that of the heptafluoroisobutyronitrile and heptafluoroisopropyl (trifluoromethyl) ketone mixture so that diluting this mixture with the dilution gas also has the effect of lowering the environmental impact of the mixture, since the GWP of a gas mixture is a weighted average derived from the sum of the fractions by weight of each of the compounds in the mixture multiplied by its corresponding GWP.

The dilution gases usually used are GWP-neutral gases having a GWP that is very low, typically equal to or less than 1.

Gases that present this set of properties are for example air, and advantageously dry air (GWP of 0), nitrogen (GWP of 0), helium (GWP of 0), carbon dioxide (GWP of 1) and dioxygen (GWP of 0). As a consequence, any one of these gases or mixtures thereof may be used as a dilution gas in the invention. In particular, the dilution gas implemented in the invention comprises or consists of a mixture of either $CO_2$ and $O_2$, or $N_2$ and $O_2$.

In the context of the present invention, in order to avoid liquefaction of heptafluoroisobutyronitrile and heptafluoroisopropyl(trifluoromethyl)ketone at the minimum utilization temperature of the equipment, the partial pressures of the different components of the gas mixture according to the invention are to be chosen for the below inequation (III) to be satisfied:

$$A + B + C < 1 \quad (III)$$

in which

$$A = P_{i\text{-}C3F7CN}/PVS_{i\text{-}C3F7CN}$$

$$B = P_{CF3C(O)CF(CF3)2}/PVS_{CF3C(O)CF(CF3)2}$$

$$C = P_{dilution}/PVS_{dilution}$$

$P_{i\text{-}C3F7CN}$ = partial pressure of heptapfluoroisobutyro nitrile at the minimum utilization temperature,
$P_{CF3C(O)CF(CF3)2}$ = partial pressure of heptafluoro isopropyl(trifluoromethyl) ketone at the minimum utilization temperature, and
$P_{dilution}$ = partial pressure of dilution gas at the minimum utilization temperature,
$PVS_{i\text{-}C3F7CN}$ = saturated vapor pressure of heptapfluoroisobutyronitrile at the minimum utilization temperature,
$PVS_{CF3C(O)CF(CF3)2}$ = saturated vapor pressure of heptafluoroisopropyl(trifluoromethyl) ketone at the minimum utilization temperature, and
$PVS_{dilution}$ = saturated vapor pressure of dilution gas at the minimum utilization temperature.

In a particular embodiment, when the gas dilution is a mixture of $CO_2$ and $O_2$, $C = P_{CO2}/PVS_{CO2} + P_{O2}/PVS_{O2}$.

In another particular embodiment, when the gas dilution is a mixture of $N_2$ and $O_2$, $C = P_{N2}/PVS_{N2} + P_{O2}/PVS_{O2}$.

Advantageously, in the context of the present invention, the minimum utilization temperature $T_{min}$ is selected from 0°C, -5°C, -10°C, -15°C, -20°C, -25°C, -30°C, -35°C, -40°C, -45°C, and -50°C, and, in particular, selected from 0°C, -5°C, -10°C, -15°C, -20°C, -25°C, -30°C, -35°C, and -40°C.

A particular example of a gas mixture for use in the present invention comprises or consists of:

- 0.001 mol% to 0.9 mol% of i-$C_3F_7CN$;
- 0.1 mol% to 5 mol% of $CF_3C(O)CF(CF_3)_2$; and
- 94.1 mol% to 99.899 mol% of dilution gas as previously defined.

A more particular example of a gas mixture for use in the present invention comprises or consists of:

- 0.001 mol% to 0.9 mol% of i-$C_3F_7CN$;
- 0.1 mol% to 5 mol% of $CF_3C(O)CF(CF_3)_2$; and
- 94.1 mol% to 99.899 mol% of dilution gas which is either a mixture of $CO_2$ and $O_2$ or a mixture of $N_2$ and $O_2$.

An even more particular example of a gas mixture for use in the present invention comprises or consists of:

- 0.001 mol% to 0.9 mol% of i-$C_3F_7CN$,
- 0.1 mol% to 5 mol% of $CF_3C(O)CF(CF_3)_2$;
- 1 mol% to 25 mol% of $O_2$ and
- 69.1 mol% to 98.899 mol% of either $CO_2$ or $N_2$.

As a consequence, the gas mixture implemented in the invention may be a quaternary mixture (i-$C_3F_7CN$ + $CF_3C(O)CF(CF_3)_2$ + $O_2$ + $CO_2$ or i-$C_3F_7CN$ + $CF_3C(O)CF(CF_3)_2$ + $O_2$ + $N_2$).

In order to improve overall dielectric strength, in a hybrid insulation system, the gas mixture comprising i-$C_3F_7CN$, $CF_3C(O)CF(CF_3)_2$ and a dilution gas as previously defined may be used in combination with solid insulation, in particular of low dielectric permittivity, that is applied as solid insulating layers on those conductive parts that are subjected to a respective electric field that is greater than the breakdown field of the medium- or high-voltage equipment without the solid insulation. In other words, part of the electrical components arranged inside the enclosure of the medium- or high-voltage equipment is covered by solid insulating layers.

These solid insulating layers can be of varying thicknesses such as the ones disclosed in international application WO 2014/037566 [2]. Alternatively, the insulating layers in a medium- or high-voltage equipment must be present a thickness of less than 1 mm such as the ones disclosed in international application WO 2017/114862 [4].

In accordance with the invention, the equipment may be, firstly, a gas-insulated electrical transformer, e.g. a power transformer or a measurement transformer.

It may also be an overhead or buried gas-insulated line, or a set of busbars for transporting or distributing electricity.

There may also be an element for connection to the other equipment in the network, e.g. overhead lines or partition bushings.

Finally, the equipment may also be a connector/disconnector (also called switchgear) such as, for example, a circuit breaker, such as a circuit breaker of the "dead tank, live tank or GIS" type, a "puffer" or "self blast"-type circuit breaker, a puffer-type circuit breaker having double motion arcing contacts, a thermal-effect puffer-type circuit breaker having single motion arcing contacts, a thermal-effect puffer-type circuit breaker having partial movement of the contact pin, a switch, a disconnector, such as air-insulated switchgear (AIS) or gas-insulated switchgear (GIS), a unit combining a switch with fuses, a grounding switch, or a contactor.

As already explained, the present invention can be applied to low- or high-pressure medium- or high-voltage equipment. In particular, the present invention can be applied to high-voltage equipment.

The present invention also provides the use of a gas medium comprising i-$C_3F_7$CN, $CF_3C(O)CF(CF_3)_2$ and a dilution gas as previously defined as a gas for electrical insulation and/or for electric arc extinction in medium- or high-voltage equipment, in which part of the electrical components may further be covered with a solid insulating layer as defined below.

Other characteristics and advantages of the invention can be seen more clearly from the additional description below, given by way of illustrative and non-limiting example.

DETAILED DESCRIPTION OF PARTICULAR EMBODIMENTS

The invention is based on the use of a particular gas mixture having a low environmental impact and improved breaking ability combining heptafluoro isobutyronitrile and heptafluoroisopropyl (trifluoromethyl)ketone as defined above, with dilution gas.

In the present invention, the expressions "dilution gas", "neutral gas", or "buffer gas" are equivalent and may be used interchangeably.

Advantageously, heptafluoroisobutyronitrile and heptafluoroisopropyl(trifluoromethyl) ketone are present in the equipment exclusively or almost exclusively in gaseous form over the entire range of utilization temperatures for said equipment. It is therefore advisable for the partial pressure of the heptafluoroisobutyronitrile and of the heptafluoroisopropyl(trifluoromethyl) ketone in the equipment to be selected as a function of the saturated vapor pressure (PVS) presented by these compounds at the lowest utilization temperature of said equipment.

However, since equipment is usually filled with gas at ambient temperature, e.g. 20°C, firstly the inequation (III) as above defined must be verified at the minimal utilization temperature and then the partial pressure of each of the gases implemented in the mixture at the minimal utilization temperature has to be brought to the filling pressure at 20°C of all gases implemented in the mixture by using equation of state of each gas.

Depending on the equipment, the recommended total filling pressure for filling with the gaseous medium varies. However, said pressure is typically of several bars, i.e. several hundreds of kilopascals (kPa).

In the context of the invention, heptafluoro isobutyronitrile and heptafluoroisopropyl (trifluoromethyl)ketone are implemented with a dilution gas (or vector gas or buffer gas) added thereto, making it possible to obtain the recommended level of filling pressure.

Preferably, the dilution gas is selected from gases presenting, firstly, a very low boiling temperature, less than or equal to the minimum utilization temperature of the equipment, and, secondly, a dielectric strength that is greater than or equal to that of carbon dioxide under test conditions (same equipment, same geometrical configuration, same operating parameters, ...) that are identical to those used in order to measure the dielectric strength of the carbon dioxide.

In addition, it is preferred for the dilution gas to be non-toxic and for it to present a GWP that is low, or zero, in such a manner that dilution of the heptafluoroisobutyronitrile by said gas also has the effect of reducing the environmental impact of said compound since the GWP of a gas mixture is proportional to the partial pressures of each of its components.

Also, the dilution gas implemented in the invention is preferably: carbon dioxide having a GWP that is equal to 1; nitrogen, oxygen, or air, advantageously dry air, having a GWP that is equal to 0; or mixtures thereof. In a particular embodiment, the dilution gas implemented in the invention comprises or consists of a mixture of $CO_2$ and $O_2$. In another particular embodiment, the dilution gas implemented in the invention comprises or consists of a mixture of $N_2$ and $O_2$.

Since heptafluoroisobutyronitrile and heptafluoro isopropyl(trifluoromethyl) ketone have dielectric strengths that are greater than those of the gases likely to be used as a dilution gas, it is desirable to optimize filling of the equipment with heptafluoroisobutyronitrile and heptafluoroisopropyl (trifluoromethyl) ketone. The equipment should therefore be filled with heptafluoroisobutyronitrile and with heptafluoroisopropyl(trifluoromethyl) ketone at a partial pressure that advantageously lies in the range 95% to 100% and, more preferably in the range 98% to 100% of the pressure corresponding, at the filling temperature, to the saturated vapor pressure presented by these compounds at the minimum utilization temperature of the equipment.

The Table III below provides different examples of gas mixtures that may be implemented in the present invention (the quantity therein are given as mol%):

Table III

| Example | 1 | 2 | 3 |
|---|---|---|---|
| i-$C_3F_7CN$ | 0.01 to 0.5 | 0.05 to 0.2 | 0.1 ± 0.03 |
| $CF_3C(O)CF(CF_3)_2$ | 0.5 to 3 | 1 to 2 | 1.5 ± 0.3 |
| $O_2$ | 1 to 25 | 1 to 25 | 1 to 25 |
| $CO_2$ or $N_2$ | 71.5 to 98.49 | 72.8 to 97.95 | 73.07 to 97.73 |

A first particular example of a quaternary gas mixture for use in the invention at a minimum temperature of -30°C consists of:

-    0,075 mol% of i-$C_3F_7CN$;
-    1,2 mol% of $CF_3C(O)CF(CF_3)_2$;
-    13 mol% of $O_2$ and
-    85,73 mol% of $CO_2$.

Such a mixture makes it possible to obtain a reduction of the order of at least 99,95% of the carbon equivalent for pure $SF_6$ (Table IV).

Table IV

| Gas | Molar mass | GWP | mol% (%P) | Mass fraction (w%) |
|---|---|---|---|---|
| i-$C_3F_7CN$ | 195 | 2750 | 0,075 | 0,32 |
| $CF_3C(O)CF(C F_3)_2$ | 266 | <1 | 1, 2 | 7, 06 |
| $O_2$ | 32 | 0 | 13 | 9, 20 |
| $CO_2$ | 44 | 1 | 85, 73 | 83,42 |
| | | | | |
| GWP mixture = 9.8 | | | | |
| | | | | |
| Reduction/$SF_6$ = 99, 96% | | | | |

A second particular example of a quaternary gas mixture for use in the invention at a minimum temperature of -25°C consists of:

-    0,075 mol% of i-$C_3F_7CN$;
-    1,75 mol% of $CF_3C(O)CF(CF_3)_2$;
-    13 mol% of $O_2$ and
-    85,18 mol% of $CO_2$.

Such a mixture makes it possible to obtain a reduction of the order of at least 99,95% of the carbon equivalent for pure $SF_6$ (Table V).

Table V

| Gas | Molar mass | GWP | mol% (%P) | Mass fraction (w%) |
|---|---|---|---|---|
| i-$C_3F_7CN$ | 195 | 2750 | 0,075 | 0,31 |
| $CF_3C(O)CF(C F_3)_2$ | 266 | <1 | 1, 75 | 10, 02 |
| $O_2$ | 32 | 0 | 13 | 8, 96 |
| $CO_2$ | 44 | 1 | 85,18 | 80, 70 |

(continued)

| Gas | Molar mass | GWP | mol% (%P) | Mass fraction (w%) |
|---|---|---|---|---|
|  |  |  |  |  |
| GWP mixture = 9.6 |  |  |  |  |
|  |  |  |  |  |
| Reduction/$SF_6$ = 99, 96% |  |  |  |  |

From a practical point of view, after creating a vacuum by means of an oil vacuum pump, commercial equipment at 5 bar (500 kPa) for use at -30°C may be filled by means of a gas mixer making it possible to control the ratio between the pressures of the heptafluoroisobutyronitrile and of the heptafluoroisopropyl(trifluoromethyl) ketone, and the pressure of the dilution gas, said ratio being kept constant and equal to 0,075% for heptafluoroisobutyronitrile, and to 1,2% for heptafluoroisopropyl(trifluoromethyl) ketone throughout filling by using a precision mass flowmeter. The vacuum (0 kPa to 0.1 kPa) is preferably prepared beforehand inside the equipment.

Moreover, at the end of its life or after circuit-breaking tests, the gaseous medium can be recovered by conventional recovery techniques using a compressor and a vacuum pump. The heptafluoroisobutyronitrile and the heptafluoroisopropyl(trifluoromethyl) ketone may then be separated from the dilution gas by using a zeolite capable of trapping only the smaller-sized dilution gas; alternatively, it is possible to use a selective separation membrane that allows the dilution gas to escape and retains the heptafluoroisobutyronitrile and the heptafluoroisopropyl(trifluoromethyl)ketone, since the latter have greater molar masses than the dilution gas. Naturally, any other option may be envisaged.

Thus, the present invention proposes gas mixtures having a low environmental impact with reduction factors of the $CO_2$ equivalent that are very substantial (of the order of 99,95%), that are compatible with the minimum utilization temperatures of the equipment, and that have dielectric properties that are improved relative to typical gases such as $CO_2$, air, or nitrogen, and close to those of pure $SF_6$ while improving its breaking abilities. This gaseous medium may advantageously replace the $SF_6$ currently used in equipment, with the design of the equipment being modified little or not at all: the same production lines can be used, while changing only the gaseous medium used for filling. In addition, thanks to higher dielectric strength, the equipment implemented in the present invention can present a reduced size and thus a reduced cost and LCA.

So as to obtain dielectric equivalence with $SF_6$, (reaching 100% of the strength of $SF_6$), without reducing its performance at low temperature or increasing the total amount of pressure, the gas mixture presented above is used in combination with solid insulation having low dielectric permittivity that is applied on those conductive parts that are subjected to respective electric fields that are greater than the breakdown field of the system without solid insulation.

The solid insulation implemented in the context of the present invention may be as the one disclosed in international application WO 2014/037566 [2] or in international application WO 2017/114862 [4].

## Bibliography

[1] International application WO 2012/080246 A1
[2] International application WO 2014/037566 A1
[3] International application WO 2015/040069 A1
[4] International application WO 2017/114862 A1

## Claims

1.  A medium- or high-voltage equipment, which is a gas-insulated electrical transformer, an overhead or buried gas-insulated line, a set of busbars for transporting or distributing electricity, an element for connection to the other equipment in the network, or a connector/disconnector,
the equipment including a leaktight enclosure in which there are located electrical components and a gas medium for providing electrical insulation and/or for extinguishing electric arcs that are likely to occur in said enclosure, said gas medium comprising heptafluoroisobutyronitrile and heptafluoroisopropyl (trifluoromethyl) ketone in a mixture with a dilution gas, wherein the quantity of heptafluoroisobutyronitrile is of less than or equal to 0.9 mol% in said gas medium.

2.  The medium- or high-voltage equipment according to claim 1, wherein, in said gas medium, the quantity of heptafluoroisopropyl(trifluoromethyl) ketone is of less than or equal to 5 mol%.

3. The medium- or high-voltage equipment according to claim 1 or 2, wherein, in said gas medium, the quantity of heptafluoroisopropyl(trifluoromethyl) ketone is comprised between 0.1 mol% and 5 mol%.

4. The medium- or high-voltage equipment according to any one of claims 1 to 3, wherein, in said gas medium, the quantity of heptafluoroisobutyronitrile is comprised between 0.001 mol% and 0.9 mol%.

5. The medium- or high-voltage equipment according to any one of claims 1 to 4, wherein said dilution gas comprises or consists of a mixture of $CO_2$ and $O_2$.

6. The medium- or high-voltage equipment according to any one of claims 1 to 4, wherein said dilution gas comprises or consists of a mixture of $N_2$ and $O_2$.

7. The medium- or high-voltage equipment according to any one of claims 1 to 6, wherein said gas medium comprises or consists of:

   - 0.001 mol% to 0.9 mol% of heptafluoro isobutyronitrile,
   - 0.1 mol% to 5 mol% of heptafluoroisopropyl (trifluoromethyl) ketone;
   - 1 mol% to 25 mol% of $O_2$ and
   - 69.1 mol% to 98.899 mol% of $CO_2$ or of $N_2$.

8. The medium- or high-voltage equipment according to any of claims 1 to 7, wherein part of the electrical components arranged inside the enclosure of said equipment is covered by solid insulating layers.

9. Use of a gas medium comprising heptafluoroisobutyronitrile and heptafluoroisopropyl (trifluoromethyl) ketone in a mixture with a dilution gas, as a gas for electrical insulation and/or for electric arc extinction in medium- or high-voltage equipment, which is a gas-insulated electrical transformer, an overhead or buried gas-insulated line, a set of busbars for transporting or distributing electricity, an element for connection to the other equipment in the network, or a connector/disconnector, in which part of the electrical components may further be covered with a solid insulating layer, wherein the quantity of heptafluoroisobutyronitrile is of less than or equal to 0.9 mol% in said gas medium.

**Patentansprüche**

1. Mittel- oder Hochspannungseinrichtung, bei der es sich um einen gasisolierten elektrischen Transformator, eine oberirdische oder erdverlegte gasisolierte Leitung, eine Sammelschienenanordnung zum Transportieren oder Verteilen elektrischer Energie, ein Element zum Anschluss an andere Betriebsmittel im Netz oder einen Verbinder/Trenner handelt,

   wobei die Einrichtung ein dichtes Gehäuse aufweist, in dem elektrische Komponenten und ein Gasmedium zur Bereitstellung einer elektrischen Isolierung und/oder zum Löschen von elektrischen Lichtbögen, die voraussichtlich in dem Gehäuse auftreten können, angeordnet sind,
   wobei das Gasmedium Heptafluoroisobutyronitril und Heptafluoroisopropyl(Trifluormethyl)keton in einem Gemisch mit einem Verdünnungsgas umfasst,
   wobei die Menge an Heptafluoroisobutyronitril in dem Gasmedium höchstens 0,9 mol% beträgt.

2. Mittel- oder Hochspannungseinrichtung nach Anspruch 1,
   **dadurch gekennzeichnet, dass** in dem Gasmedium die Menge an Heptafluoroisopropyl(Trifluormethyl)keton höchstens 5 mol% beträgt.

3. Mittel- oder Hochspannungseinrichtung nach Anspruch 1 oder 2,
   **dadurch gekennzeichnet, dass** in dem Gasmedium die Menge an Heptafluoroisopropyl(Trifluormethyl)keton zwischen 0,1 mol% und 5 mol% liegt.

4. Mittel- oder Hochspannungseinrichtung nach einem der Ansprüche 1 bis 3, **dadurch gekennzeichnet, dass** in dem Gasmedium die Menge an Heptafluoroisobutyronitril zwischen 0,001 mol% und 0,9 mol% liegt.

**5.** Mittel- oder Hochspannungseinrichtung nach einem der Ansprüche 1 bis 4, **dadurch gekennzeichnet, dass** das Verdünnungsgas eine Mischung aus $CO_2$ und $O_2$ umfasst oder daraus besteht.

**6.** Mittel- oder Hochspannungseinrichtung nach einem der Ansprüche 1 bis 4, **dadurch gekennzeichnet, dass** das Verdünnungsgas eine Mischung aus $N_2$ und $O_2$ umfasst oder daraus besteht.

**7.** Mittel- oder Hochspannungseinrichtung nach einem der Ansprüche 1 bis 6, **dadurch gekennzeichnet, dass** das Gasmedium Folgendes umfasst oder daraus besteht:

- 0,001 mol% bis 0,9 mol% Heptafluoroisobutyronitril,
- 0,1 mol% bis 5 mol% Heptafluoroisopropyl(Trifluormethyl)keton,
- 1 mol% bis 25 mol% $O_2$ und
- 69,1 mol% bis 98,899 mol% $CO_2$ oder $N_2$.

**8.** Mittel- oder Hochspannungseinrichtung nach einem der Ansprüche 1 bis 7, **dadurch gekennzeichnet, dass** ein Teil der innerhalb des Gehäuses der Einrichtung angeordneten elektrischen Komponenten mit festen Isolierschichten bedeckt ist.

**9.** Verwendung eines Gasmediums, das Heptafluoroisobutyronitril und Heptafluoroisopropyl(Trifluormethyl) keton in einem Gemisch mit einem Verdünnungsgas umfasst, als Gas zur elektrischen Isolierung und/oder zum Löschen von Lichtbögen in einer Mittel- oder Hochspannungseinrichtung, bei der es sich um einen gasisolierten elektrischen Transformator, eine oberirdische oder erdverlegte gasisolierte Leitung, eine Sammelschienenanordnung zum Transportieren oder Verteilen elektrischer Energie, ein Element zum Anschluss an andere Betriebsmittel im Netz oder einen Verbinder/Trenner handelt, bei der ein Teil der elektrischen Komponenten zusätzlich mit einer festen Isolierschicht bedeckt sein kann, wobei die Menge an Heptafluoroisobutyronitril in dem Gasmedium höchstens 0,9 mol% beträgt.

**Revendications**

**1.** Équipement moyenne ou haute tension, qui est un transformateur électrique isolé au gaz, une ligne aérienne ou enterrée isolée au gaz, un jeu de barres omnibus pour transporter ou distribuer l'électricité, un élément à connecter à l'autre équipement dans le réseau, ou un connecteur/sectionneur,
l'équipement incluant une enceinte étanche dans laquelle se trouvent des composants électriques et un milieu gazeux pour assurer l'isolation électrique et/ou pour éteindre les arcs électriques susceptibles de se produire dans ladite enceinte, ledit milieu gazeux comprenant de l'heptafluoroisobutyronitrile et de l'heptafluoroisopropyl(trifluorométhyl)cétone en mélange avec un gaz de dilution, dans lequel la quantité d'heptafluoroisobutyronitrile est inférieure ou égale à 0,9 % mol dans ledit milieu gazeux.

**2.** Équipement moyenne ou haute tension selon la revendication 1, dans lequel, dans ledit milieu gazeux, la quantité d'heptafluoroisopropyl(trifluorométhyl)cétone est inférieure ou égale à 5 % mol.

**3.** Équipement moyenne ou haute tension selon la revendication 1 ou 2, dans lequel, dans ledit milieu gazeux, la quantité d'heptafluoroisopropyl(trifluorométhyl)cétone est comprise entre 0,1 % mol et 5 % mol.

**4.** Équipement moyenne ou haute tension selon l'une quelconque des revendications 1 à 3, dans lequel, dans ledit milieu gazeux, la quantité d'heptafluoroisobutyronitrile est comprise entre 0,001 % mol et 0,9 % mol.

**5.** Équipement moyenne ou haute tension selon l'une quelconque des revendications 1 à 4, dans lequel ledit gaz de dilution comprend ou consiste en un mélange de $CO_2$ et d'$O_2$.

**6.** Équipement moyenne ou haute tension selon l'une quelconque des revendications 1 à 4, dans lequel ledit gaz de dilution comprend ou consiste en un mélange de $N_2$ et d'$O_2$.

**7.** Équipement moyenne ou haute tension selon l'une quelconque des revendications 1 à 6, dans lequel ledit milieu gazeux comprend ou consiste en :

- 0,001 % mol à 0,9 % mol d'heptafluoroisobutyronitrile,

- 0,1 % mol à 5 % mol d'heptafluoroisopropyl(trifluorométhyl)cétone ;
- 1% mol à 25 % mol d'$O_2$ et
- 69,1 % mol à 98,899 % mol de $CO_2$ ou de $N_2$.

8. Équipement moyenne ou haute tension selon l'une quelconque des revendications 1 à 7, dans lequel une partie des composants électriques agencés à l'intérieur de l'enveloppe dudit équipement est recouverte de couches isolantes solides.

9. Utilisation d'un milieu gazeux comprenant de l'heptafluoroisobutyronitrile et de l'heptafluoroisopropyl(trifluorométhyl) cétone en mélange avec un gaz de dilution, en tant que gaz d'isolation électrique et/ou pour l'extinction d'arc électrique dans un équipement moyenne ou haute tension, qui est un transformateur électrique isolé au gaz, une ligne aérienne ou enterrée isolée au gaz, un jeu de barres omnibus pour transporter ou distribuer l'électricité, un élément à connecter à l'autre équipement dans le réseau, ou un connecteur/sectionneur, dans lesquels une partie des composants électriques peut en outre être recouverte d'une couche isolante solide, dans laquelle la quantité d'heptafluoroisobutyronitrile est inférieure ou égale à 0,9 % mol dans ledit milieu gazeux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012080246 A
- WO 2014037566 A
- WO 2015040069 A
- US 2022359138 A
- WO 2017114862 A
- WO 2012080246 A1
- WO 2014037566 A1
- WO 2015040069 A1
- WO 2017114862 A1

**Non-patent literature cited in the description**

- *CHEMICAL ABSTRACTS,* 42532-60-5
- *CHEMICAL ABSTRACTS,* 756-12-7